(19) **Europäisches Patentamt / European Patent Office / Office européen des brevets**

(11) **EP 3 205 175 B1**

(12) **FASCICULE DE BREVET EUROPEEN**

(45) Date de publication et mention
de la délivrance du brevet:
**26.09.2018 Bulletin 2018/39**

(21) Numéro de dépôt: **15774631.4**

(22) Date de dépôt: **06.10.2015**

(51) Int Cl.:
*H04L 29/06* (2006.01)     *H04W 28/02* (2009.01)
*H04W 28/10* (2009.01)     *H04L 12/721* (2013.01)
*H04L 12/751* (2013.01)     *H04W 40/24* (2009.01)
*H04W 84/18* (2009.01)

(86) Numéro de dépôt international:
**PCT/EP2015/072975**

(87) Numéro de publication internationale:
**WO 2016/055433 (14.04.2016 Gazette 2016/15)**

(54) **PROCÉDÉ D'AUTORISATION DE DEMANDES DE TRANSMISSION**

VERFAHREN ZUR AUTORISIERUNG VON ÜBERTRAGUNGSANFRAGEN

METHOD FOR AUTHORISING TRANSMISSION REQUESTS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.10.2014 FR 1459603**

(43) Date de publication de la demande:
**16.08.2017 Bulletin 2017/33**

(73) Titulaire: **Safran Electronics & Defense SAS
92100 Boulogne-Billancourt (FR)**

(72) Inventeur: **GUETTIER, Christophe
F-92100 Boulogne-Billancourt (FR)**

(74) Mandataire: **Cabinet Le Guen Maillet
3, impasse de la Vigie
CS 71840
35418 Saint-Malo Cedex (FR)**

(56) Documents cités:
**US-A1- 2009 122 748**

- **CHRISTOPHE GUETTIER ET AL: "Automatic Optimisation of Reliable Collaborative Services in OLSR Mobile Ad Hoc Networks", MILITARY COMMUNICATIONS CONFERENCE, 2007. MILCOM 2007. IEEE, IEEE, PISCATAWAY, NJ, USA, 29 octobre 2007 (2007-10-29), pages 1-7, XP031232631, ISBN: 978-1-4244-1512-0**
- **GUENANE FOUAD ET AL: "Solving virtual network resource allocation problems using a constraint satisfaction problem model", 2013 FOURTH INTERNATIONAL CONFERENCE ON THE NETWORK OF THE FUTURE (NOF), IEEE, 23 octobre 2013 (2013-10-23), pages 1-5, XP032558799, DOI: 10.1109/NOF.2013.6724513**
- **JULIAN D ET AL: "QoS and fairness constrained convex optimization of resource allocation for wireless cellular and ad hoc networks", PROCEEDINGS IEEE INFOCOM 2002. THE CONFERENCE ON COMPUTER COMMUNICATIONS. 21ST. ANNUAL JOINT CONFERENCE OF THE IEEE COMPUTER AND COMMUNICATIONS SOCIETIES. NEW YORK, NY, JUNE 23 - 27, 2002; [PROCEEDINGS IEEE INFOCOM. THE CONFERENCE ON COMPUTER COMMUNI, 23 juin 2002 (2002-06-23), pages 477-486, XP032068852, DOI: 10.1109/INFCOM.2002.1019292 ISBN: 978-0-7803-7476-8**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé de maximisation d'une quantité de transmissions actives dans un réseau mobile sans fil.

L'invention se situe dans le domaine des communications sur réseaux sans fils. L'invention est notamment adaptée pour des réseaux de type réseau ad-hoc sans infrastructure comportant des noeuds mobiles comme les réseaux de type MANET (réseau Ad-Hoc mobile: « Mobile Ad-hoc NETwork » en terminologie anglo-saxonne). Chaque noeud est mis en oeuvre sous la forme d'un dispositif de communication sans fil. Dans un réseau ad-hoc mobile, chaque noeud du réseau est relié à d'autres noeuds du réseau par un ensemble de liens inter-noeuds, cet ensemble pouvant varier dans le temps. Les liens sont établis automatiquement grâce à un protocole de communication pour réseaux mobiles, par exemple de type LSR (routage par état de liens : « Link State Routing » en terminologie anglo-saxonne). La présente invention s'applique donc à des dérivés des réseaux LSR, c'est-à-dire des réseaux utilisant le standard OSPF (ouverture du chemin de transmission le plus court en premier : « Open Shortest Path First » en terminologie anglo-saxonne, et des versions optimisées du standard OSPF, comme OLSR (Routage par état de liens optimisé : « Optimised Link State Routing » en terminologie anglo-saxonne) ou MARP (Protocole de routage prenant en compte la mobilité : « Mobility Aware Routing Protocol » en terminologie anglo-saxonne). Chaque lien possède des capacités limitées, elles aussi variables dans le temps, comme par exemple une bande passante ou une latence de transmission. Les liens et noeuds forment un graphe de communication (aussi dénommé topologie) variable dans le temps. On parlera dans la suite du document de capacités du réseau pour englober les capacités de l'ensemble des liens constituant un réseau.

Un réseau ad-hoc mobile peut supporter bon nombre d'applications. Dans une application d'échange de données envisagée dans le cadre de l'invention, chaque noeud est aussi un capteur optronique capable d'acquérir des données et notamment des données de type image, vidéo et/ou audio. Les données ainsi acquises sont échangées entre des noeuds du réseau suite à des demandes de transmission émises soit par un noeud source, soit par un ou plusieurs noeuds destinataires. En fonction du nombre de destinataires, les transmissions pourront se faire en mode point-à-point (« unicast » en terminologie anglo-saxonne), ou en mode point-multipoint (« multicast » en terminologie anglo-saxonne).

Pour éviter des phénomènes de congestion ou de perte de données dans le réseau, il faut en général s'assurer de la compatibilité des caractéristiques d'un trafic de données induit par une transmission avec les capacités d'un réseau. Parmi les caractéristiques les plus souvent considérées, on trouve un débit du trafic, une latence requise pour ce trafic et parfois un niveau de priorité relatif de ce trafic par rapport à d'autres trafics concurrents. Le niveau de priorité d'un trafic, aussi appelé niveau de criticité, est le plus souvent représentatif du niveau d'importance de ce trafic. On considèrera par la suite que les trafics les plus critiques doivent impérativement être transmis.

La mise en oeuvre d'une application d'échange de données dans un réseau ad-hoc mobile pose un certain nombre de problèmes et notamment un problème de gestion des demandes de transmission. En effet, le caractère mobile des noeuds du réseau entraîne des variations constantes de sa topologie. Les capacités des liens reliant deux noeuds peuvent, par conséquent, varier au cours du temps. De plus, de nouveaux noeuds peuvent apparaître alors que d'autres peuvent disparaître, ce qui induit des créations et des disparitions de liens. Il semble ainsi nécessaire de prendre constamment en compte ces modifications de topologie dans la gestion des demandes de transmission, mais aussi dans la gestion des transmissions en cours.

L'invention a pour but de maximiser un nombre de transmissions actives dans le réseau ad-hoc mobile considéré à un instant donné. Une transmission active est ici définie comme une transmission en cours, ayant fait préalablement l'objet d'une demande de transmission, cette demande ayant été autorisée par un système de gestion des demandes de transmission. Une demande de transmission autorisée se concrétise donc par une transmission active. Par opposition, une demande de transmission en attente est une demande n'ayant pas été autorisée par le système de gestion des demandes de transmission, cette demande ayant été mise en attente pour pouvoir être considérée plus tard par le système. Elle peut se révéler caduque si elle ne peut être honorée par le réseau. Cela peut être le cas suite à une intervention d'un opérateur ou après expiration d'un temps maximal (« time-out » en terminologie anglo-saxonne) d'admission. Nous verrons par la suite que la résolution de ce problème global revient à résoudre des problèmes plus ciblés dépendant du contexte, comme par exemple la vérification de la compatibilité du trafic associé à une demande de transmission avec les capacités du réseau, ou la mise à jour des transmissions en cours en cas de modification de topologie.

Le brevet US20090122748A1 décrit une méthode pour gérer dynamiquement des métriques de qualité dans un réseau ad-hoc comprenant une pluralité de noeuds utilisés pour router des paquets de données.

Le document « C. Guettier et Al. :automatic optimisation of reliable collaborative services in OLSR mobile Ad Hoc Networks », Military communications conference, 2007, MILCOM 2007, IRRR, Piscataway, NJ, USA, 29 octobre 2007, Pages 1-7, XP031232631 » propose une méthode de gestion de réseaux MANET.

L'invention concerne un procédé de maximisation d'une quantité de demandes de transmission autorisées parmi un ensemble de demandes de transmission dans un réseau sans fil mobile comprenant une pluralité de noeuds mobiles reliés par des liens, chaque lien étant associé à des capacités comprenant une bande passante et une latence, chaque transmission devant s'opérer sur un chemin de transmission et étant associée à des caractéristiques comprenant un débit et une latence maximale admissibles, ledit procédé étant mis en oeuvre par un noeud maître et étant caractérisé en ce qu'il est activé sur réception par le noeud maître d'un évènement appartenant à un ensemble prédéfini d'événements, l'ensemble prédéfini d'événements comprenant un premier type d'événement impliquant une modification de topologie du réseau, et en ce qu'il comprend les étapes suivantes: obtenir un ensemble de demandes de transmission ; si l'événement est du premier type, mettre en oeuvre une procédure d'optimisation sous contrainte comprenant les étapes suivantes : définir des contraintes comprenant des contraintes de débit et de latence en fonction des capacités de chaque lien impliqué dans chaque chemin de transmission retenu pour chaque demande de transmission de l'ensemble de demandes de transmission ; définir au moins un sous-ensemble de l'ensemble de demandes de transmission ; associer chaque sous-ensemble défini avec une fonction de coût, la fonction de coût associée à un sous-ensemble prenant en compte les chemins de transmission retenus pour les demandes de transmission respectives comprises dans le sous-ensemble ; déterminer un sous-ensemble de cardinalité maximale compatible avec les contraintes définies et minimisant la fonction de coût, le sous-ensemble déterminé représentant les demandes de transmission à autoriser.

De cette manière, le procédé assure que le nombre de demandes de transmission est maximisé et utilise au maximum les capacités du réseau sans fil mobile.

Selon un mode de réalisation, l'ensemble prédéfini comprend un second type d'événement n'impliquant aucune modification de topologie du réseau, la détermination du sous-ensemble de cardinalité maximum compatible avec les contraintes définies dans le cadre d'un évènement du deuxième type utilise une procédure de détermination des demandes de transmission à autoriser simplifiée, la mise en oeuvre de la procédure d'optimisation sous contrainte dépendant du résultat de la procédure de détermination des demandes de transmission à autoriser simplifiée.

De cette manière, le choix des demandes de transmission à autoriser est simplifié.

Selon un mode de réalisation, les caractéristiques d'une demande de transmission comprennent de plus un niveau de criticité permettant d'ordonner le traitement des demandes de transmission entre elles, les niveaux de criticité respectifs des demandes de transmission d'un sous-ensemble donné étant pris en compte par le procédé sous forme d'une contrainte supplémentaire permettant d'assurer que le sous-ensemble déterminé comprend les demandes de transmission de l'ensemble des demandes de transmission associées à des niveaux de criticité les plus élevés.

De cette manière, les demandes de communication les plus importantes sont privilégiées.

Selon un mode de réalisation, chaque chemin de transmission retenu pour une demande de transmission appartenant à un sous-ensemble de demandes de transmission donné est associé à un coût dépendant d'une quantité de noeuds traversés par le chemin de transmission, la fonction de coût d'un sous-ensemble de demandes de transmission donné étant la somme des coûts associés aux chemins de transmission retenus pour chaque demande de transmission comprise dans le sous-ensemble de demandes de transmission donné.

Selon un mode de réalisation, la procédure d'optimisation sous contrainte comprend une recherche de chemins de transmission optimaux pour chaque demande de transmission.

Selon un mode de réalisation, l'ensemble des demandes de transmission comprend des demandes autorisées associées à des transmissions en cours et des demandes en attente.

Selon un mode de réalisation, chaque noeud du réseau comprend un capteur optronique capable d'acquérir des informations comprenant des données de type image et vidéo, les transmissions mises en oeuvre par le procédé étant des transmissions de ces informations.

Selon un mode de réalisation, le premier type d'événement correspond à des événements relatifs à : une modification d'au moins une caractéristique d'un lien du réseau ; ou, une apparition de nouveau noeud dans le réseau.

Selon un mode de réalisation, le second type d'événement correspond à des événements relatifs à : une réception d'une nouvelle demande de transmission de la part d'un noeud source ou d'un noeud destinataire sans modification de topologie du réseau ; ou, une fin d'une transmission active sans modification de topologie du réseau.

Selon un mode de réalisation, le sous-ensemble déterminé est le sous-ensemble de cardinalité maximale compatible avec l'ensemble des contraintes définies et minimisant la fonction de coût à un moment d'arrêt de la procédure d'optimisation sous contrainte.

Selon un deuxième aspect de la présente invention, la présente invention concerne un dispositif de communication apte à maximiser une quantité de demandes de transmission autorisées parmi un ensemble de demandes de transmission dans un réseau sans fil mobile comprenant une pluralité de dispositifs de communication reliés par des liens, chaque lien étant associé à des capacités comprenant une bande passante et une latence, chaque transmission devant s'opérer sur un chemin de transmission et étant associée à des caractéristiques comprenant un débit et une latence maximale admissibles, ledit dispositif étant caractérisé en ce qu'il comprend : des moyens pour recevoir des événements ; des moyens pour déterminer un type d'un évènement reçu dans un ensemble prédéfini d'événements, l'ensemble prédéfini d'événements comprenant un premier type d'événement impliquant une modification de topologie du réseau ; des moyens pour obtenir un ensemble de demandes de transmission ; et, des moyens pour optimiser sous contrainte comprenant: des moyens pour définir des contraintes comprenant des contraintes de débit et de latence en fonction des capacités de chaque lien impliqué dans chaque chemin de transmission retenu pour chaque demande de transmission de l'ensemble de demandes de transmission obtenu ; des moyens pour définir des sous-ensembles de l'ensemble de demandes de transmission obtenu ; des moyens pour associer chaque sous-ensemble défini avec une fonction de coût, la fonction de coût associée à un sous-ensemble prenant en compte les chemins de transmission retenus pour les demandes de transmission respectives comprises dans le sous-ensemble ; et, des moyens pour déterminer parmi les sous-ensembles définis, un sous-ensemble de cardinalité maximale compatible avec les contraintes définies et minimisant la fonction de coût associée, le sous-ensemble déterminé représentant les demandes de transmission à autoriser.

Selon un troisième aspect de la présente invention, la présente invention concerne un système de communication comprenant une pluralité de dispositifs de communication mobiles communicant selon un mode de communication sans fils, et comprenant un dispositif de communication selon le deuxième aspect.

Selon un quatrième aspect de la présente invention, la présente invention concerne un produit programme d'ordinateur comportant des instructions pour mettre en oeuvre, par un dispositif, le procédé selon le premier aspect par un processeur du dispositif.

Selon un cinquième aspect de la présente invention, la présente invention concerne des moyens de stockage, stockant un programme d'ordinateur comportant des instructions pour mettre en oeuvre, par un dispositif, le procédé selon le premier aspect lorsque ledit programme est exécuté par un processeur du dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 représente sous forme de schéma le principe d'un algorithme de gestion des demandes de transmission adapté à une application d'échange de données dans un réseau ad-hoc mobile;
- la Fig. 2 représente un algorithme de vérification de la compatibilité d'un trafic induit par une demande de transmission avec des caractéristiques du réseau ad-hoc mobile;
- la Fig. 3 représente un algorithme de test de la compatibilité d'un trafic induit par une demande de transmission avec des caractéristiques du réseau et prenant en compte des trafics déjà existants sur le réseau ad-hoc mobile;
- la Fig. 4 représente un algorithme d'optimisation sous contrainte de la quantité de transmissions actives sur le réseau ad-hoc mobile à un instant donné;
- la Fig. 5 représente un algorithme de vérification de la compatibilité de transmissions existantes avec une évolution de la topologie du réseau ad-hoc mobile;
- la Fig. 6 représente un algorithme de mise à jour des transmissions sur le réseau ad-hoc mobile;
- la Fig. 7 illustre schématiquement un exemple d'architecture matérielle d'un dispositif apte à mettre en oeuvre un noeud du réseau selon la présente invention; et
- la Fig. 8 illustre un exemple de réseau ad-hoc mobile.

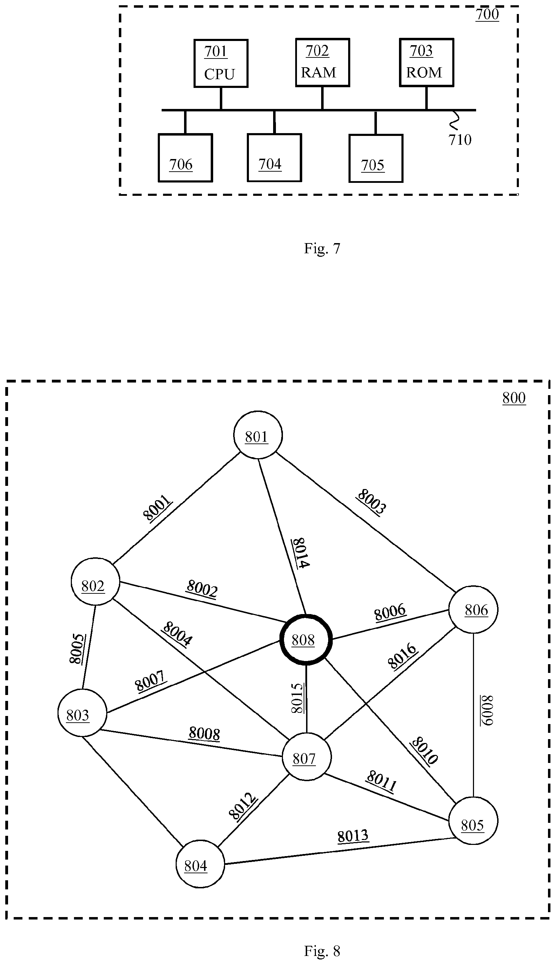

L'invention est mise en oeuvre dans un réseau de type réseau ad-hoc mobile et est particulièrement avantageuse dans un réseau ad-hoc mobile maillé dont un exemple est représenté par la **Fig. 8.** La Fig. 8 représente un réseau ad-hoc mobile maillé 800 comportant huit noeuds mobiles, numérotés de 801 à 808 sur la Fig. 8. Comme nous l'avons vu plus haut, chaque noeud comporte des moyens de communication sans fils et des moyens d'acquisition de données comme par exemple un capteur optronique. Les noeuds sont reliés entre eux par des liens sans fils, numérotés de 8001 à 8016 sur la Fig. 8. Le nombre de liens et leurs caractéristiques, telles que leur bande passante et leur latence, sont variables dans le temps. Un trafic induit par une transmission entre un noeud source et un noeud récepteur emprunte un certain nombre de liens qui forment entre eux un chemin de transmission. Le chemin de transmission entre deux noeuds emprunté par le trafic est le plus souvent déterminé par un algorithme de routage de type LSR. Comme nous pouvons le voir dans la Fig. 8, une transmission entre un noeud source et un noeud destinataire peut emprunter plusieurs chemins de transmission. Il est alors nécessaire de choisir parmi les chemins de transmission possibles, un chemin de transmission optimal suivant un critère donné, comme par exemple le nombre de noeuds traversés qui est à minimiser. Parmi les noeuds du réseau, un noeud particulier est prévu pour gérer la synchronisation des horloges de tous les noeuds et de mettre en oeuvre un procédé de gestion des demandes de transmission selon l'invention. Ce noeud, que nous appellerons « noeud maître » par la suite, et numéroté 808 sur la Fig. 8, peut être défini par un utilisateur à l'initialisation du réseau.

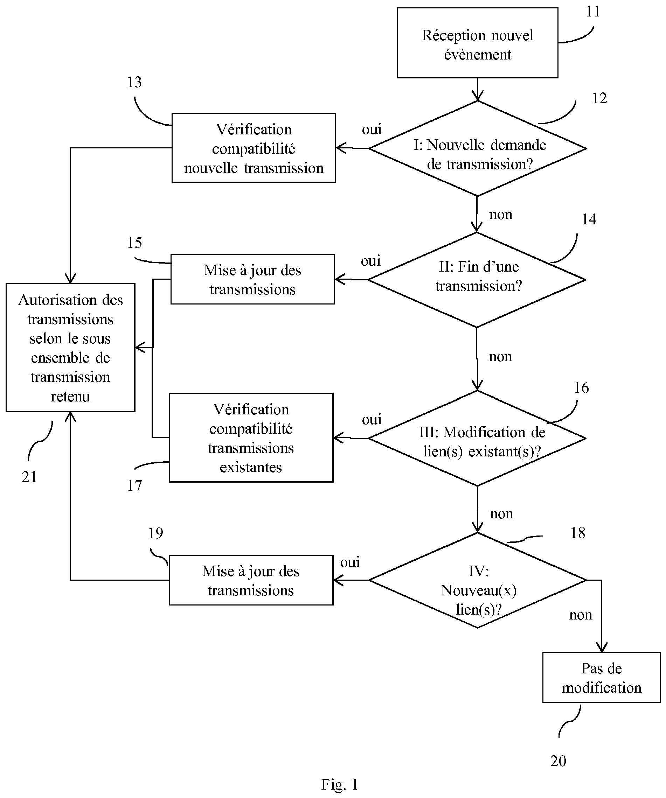

Un algorithme de gestion des demandes de transmission selon l'invention est illustré à la **Fig. 1.** Cet algorithme est mis en oeuvre par le noeud maître du réseau. L'algorithme de gestion des demandes de transmission peut être lancé dans une étape 11 lors de la réception d'un évènement par le noeud maître.

Dans le contexte de l'invention, un événement peut être de plusieurs types. Les deux premiers types d'événements envisagés n'induisent pas de modification de la topologie du réseau.

I. Il s'agit pour le premier de la réception d'une ou plusieurs nouvelles demandes de transmission formulée(s) soit par un noeud source, soit par un noeud destinataire, soit automatiquement, soit suite à une requête d'un utilisateur. Le procédé de l'invention consiste à insérer cette (ou ces) nouvelle(s) transmission(s) qui peut (peuvent) être acceptée(s) en prenant en compte les capacités du réseau et les transmissions actives, *i.e.* les transmissions en cours, mais aussi éventuellement les demandes de transmission qui n'auraient pas été honorées et qui sont restées en attente. On note que lorsqu'une demande de transmission concerne une transmission entre un noeud source et une pluralité de récepteurs, par exemple dans le cadre d'une transmission point-multipoint, on considère que la demande de transmission concerne une pluralité de transmissions point à point entre le noeud source et chacun des noeuds récepteurs. Chaque transmission point à point est alors vérifiée. Dans un mode de réalisation, chaque transmission point à point peut être acceptée et mise en oeuvre indépendamment des autres transmissions point à point de la pluralité de transmissions point à point. Dans un autre mode de réalisation, lorsqu'au moins une transmission point à point de la pluralité de transmissions point à point n'est pas acceptée, la transmission point-multipoint est intégralement refusée, de sorte qu'aucune transmission point à point n'est mise en oeuvre.

II. Pour le second, il s'agit de la cessation d'une transmission active. Cette fin de transmission libère des ressources sur le réseau.

Les deux types d'événements suivants induisent des changements de la topologie du réseau:

III. Il s'agit pour le premier, d'une modification de liens existants. Le réseau étant mobile, les noeuds se déplacent et les capacités des liens connectant ces noeuds entre eux évoluent au cours du temps. La bande passante de certains noeuds peut par exemple diminuer, ou s'annuler, ce qui peut entraîner un reroutage de certaines transmissions actives sur d'autres liens, ou l'arrêt de certaines transmissions. Inversement, la bande passante de certains liens peut augmenter.

IV. Pour le second, il s'agit de l'établissement de nouveaux liens. Cet évènement couvre l'arrivée d'un nouveau noeud dans le réseau. Ce nouveau noeud entraîne la création de nouveaux liens et l'introduction de nouveaux trafics associés au nouveau noeud, ce qui modifie les capacités du réseau. Des transmissions mises jusque-là en attente peuvent alors être honorées du fait de ces nouvelles capacités.

Nous verrons par la suite que la distinction entre les évènements n'induisant pas de modification de la topologie du réseau et ceux induisant une telle modification permet de simplifier la résolution du problème de gestion des demandes de transmission.

Dans une autre mise en oeuvre, l'algorithme de gestion des demandes de transmission peut être lancé périodiquement par exemple pour suivre les évolutions de la topologie du réseau ou des transmissions en cours. Le lancement de l'algorithme de gestion des demandes de transmission peut par exemple faire suite à un algorithme de mise à jour des tables de routage des noeuds du réseau, mis en oeuvre par un protocole de routage, par exemple de type LSR.

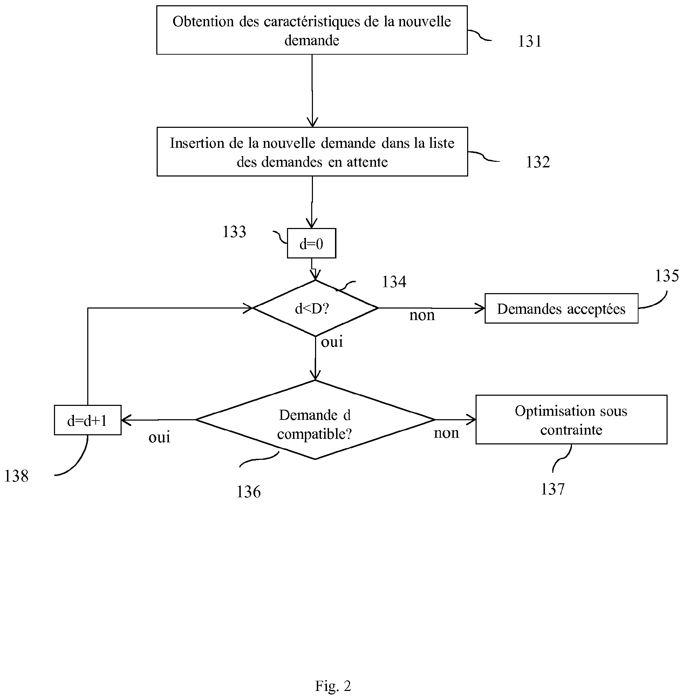

L'algorithme de gestion des demandes de transmission se poursuit donc par l'identification du type du nouvel événement reçu par le noeud maître. Lors d'une étape 12, le noeud maître détermine si l'événement est de type I. Si oui, l'algorithme se poursuit par une étape 13 de vérification de la compatibilité d'une nouvelle demande de transmission avec les capacités du réseau que nous détaillons par la suite en relation avec les Figs. 2 à 4.

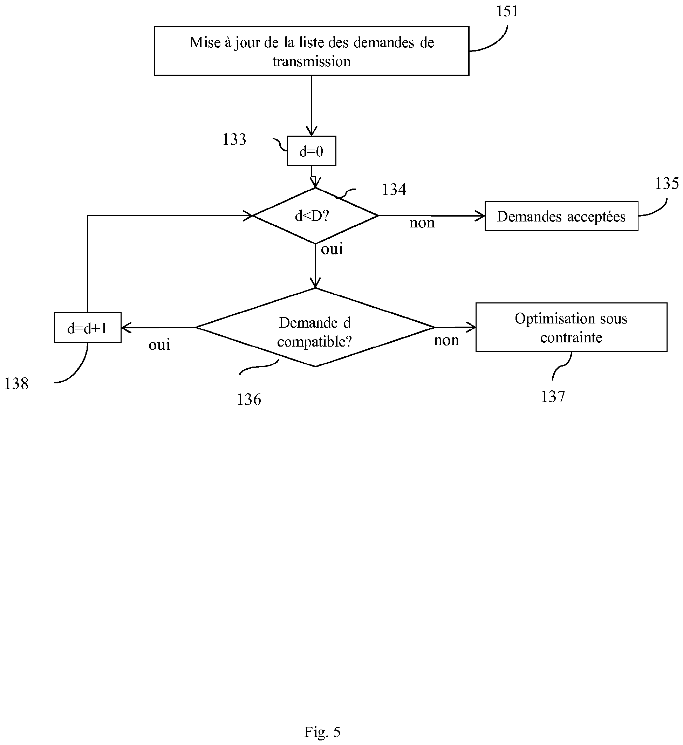

Sinon, le noeud maître détermine si l'événement est de type II lors d'une étape 14. Si c'est le cas, cette étape est suivie d'une étape 15 de mise à jour des transmissions que nous détaillerons par la suite en relation avec la Fig. 5.

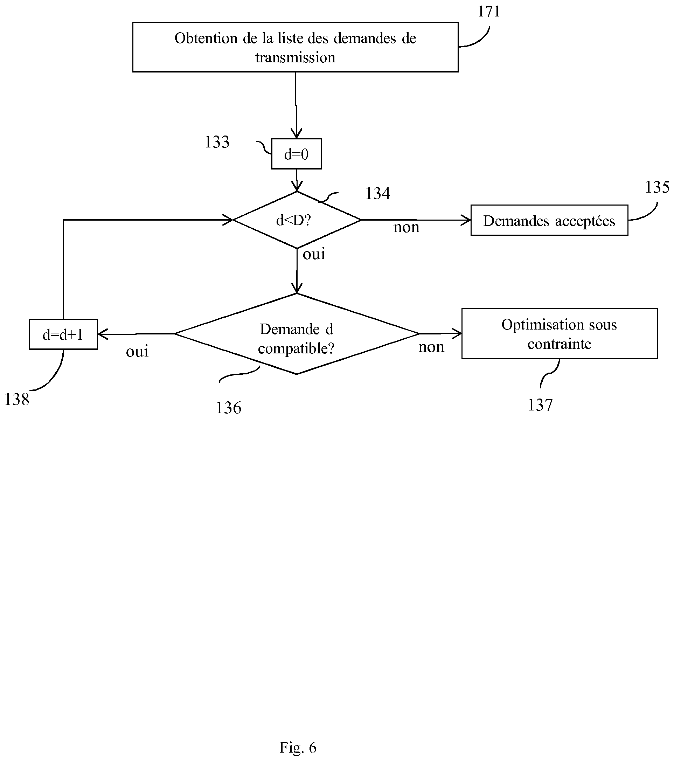

Sinon, le noeud maître détermine si l'événement est de type III lors d'une étape 16. Si c'est le cas, l'algorithme se poursuit avec une étape 17 de vérification de la compatibilité des transmissions existantes avec les capacités du réseau que nous détaillerons en relation avec la Fig. 6.

Sinon, le noeud maître détermine si l'événement est de type IV lors d'une étape 18. Si c'est le cas, l'algorithme se poursuit par une étape 19 de mise à jour des transmissions que nous détaillerons par la suite de nouveau en relation avec la Fig. 6.

Si l'événement considéré ne correspond pas à un évènement connu, aucune modification n'est apportée aux transmissions en cours. Les étapes 13, 15, 17 et 19 sont suivies par une étape 21 dans laquelle le noeud maître autorise que soient mises en oeuvre des transmissions correspondant à un ensemble de demandes de transmission sélectionnées lors des étapes 13, 15, 17 et 19. Si aucun sous-ensemble n'a été retenu, aucune transmission n'est mise en oeuvre.

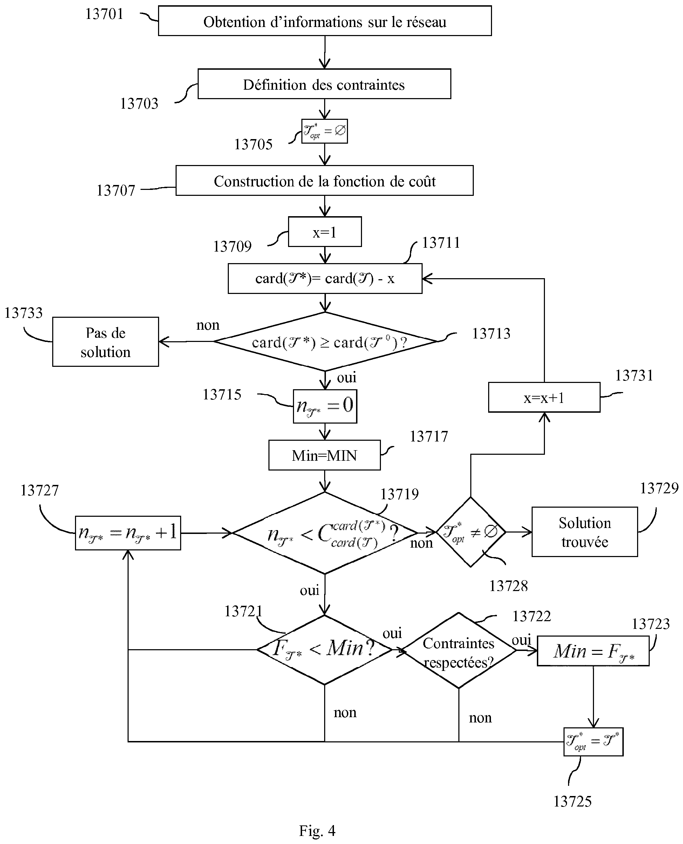

Dans un mode de réalisation, si l'événement considéré ne correspond pas à un évènement connu, le noeud maître met en oeuvre un algorithme d'optimisation sous contrainte de la quantité de transmissions actives sur le réseau ad-hoc mobile décrit en relation avec la Fig. 4.

Une mise en oeuvre détaillée de l'étape 13 de la Fig. 1 est décrite en **Fig. 2.** Lors d'une étape 131, des caractéristiques d'une nouvelle demande de transmission sont obtenues par le noeud maître par exemple sous la forme d'une requête. Les caractéristiques contenues dans la requête comprennent par exemple une identification du noeud source de la transmission demandée, une identification d'un ou plusieurs destinataires de cette transmission, un débit du trafic induit par cette transmission, une latence requise par cette transmission et un niveau de criticité de cette transmission. Cette nouvelle demande est insérée dans une liste de demandes en attente lors d'une étape 132. Cette liste peut être vide ou déjà contenir une ou plusieurs demandes de transmission en attente.

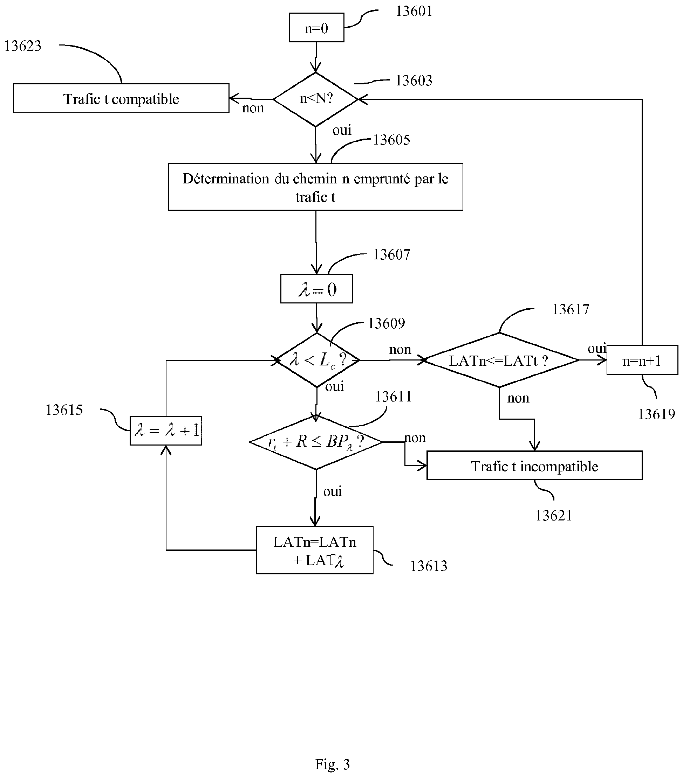

On utilise une variable $D$ pour représenter le nombre de demandes de transmission en attente présentes dans la liste. Lors d'une étape 133, on initialise une variable $d$ à la valeur « 0 ». Cette variable $d$ est utilisée pour parcourir la liste des demandes en attente. Lors d'une étape 134, la variable $d$ est comparée à la variable $D$ pour déterminer si toutes les demandes de transmission en attente ont été considérées. Si des demandes restent à considérer, lors d'une étape 136, le noeud maître teste la compatibilité du trafic induit par la demande d'indice $d$ avec les capacités du réseau et notamment avec les capacités des liens impliqués dans le chemin de transmission retenu pour le trafic induit par la demande d'indice $d$. Nous détaillerons l'étape 136 en relation avec la Fig. 3.

Si le trafic associé à la demande d'indice $d$ est compatible avec le chemin de transmission retenu pour la transmission de ce trafic, le noeud maître effectue une étape 138 au cours de laquelle la variable $d$ est incrémentée d'une unité pour passer à la demande de transmission suivante.

Si, lors de l'étape 134, la variable $d$ a atteint la valeur de la variable $D$, toutes les demandes de transmission en attente sont acceptées par le noeud maître lors d'une étape 135. La liste des demandes en attente est alors vidée. Dans ce cas, les transmissions en cours peuvent continuer et les transmissions correspondant aux demandes en attente sont mises en oeuvre.

Pour ce faire, la réservation des liens impliqués dans la transmission des trafics, pour toutes les demandes acceptées, peut être assurée par le protocole RSVP (protocole de réservation de ressources (« Resource reSerVation Protocol » en terminologie anglo-saxonne).

L'accès concurrent au médium des différentes transmissions pourra être assuré par des méthodes classiques de la couche liaison (« Médium Access Control Layer » en terminologie anglo-saxonne) de données du modèle OSI (« Open Systems Interconnection" en terminologie anglo-saxonne) comme les méthodes:

- CSMA/CA : « Carrier Sense Multiple Access/collision avoidance »
- CSMA/CD : « Carrier Sense Multiple Access/Collision Détection »
- CDMA : « Code Division Multiple Access »
- TDMA : « Time Division Multiple Access »
- FTDMA (ou OFDMA) : « Frequency Time Division Multiple Access » (ou « Orthogonal Frequency Division Multiple Access »).

Par contre, si, lors de l'étape 136, le noeud maître détermine qu'un des trafics induit par l'une des demandes en attente est incompatible avec une transmission sur un chemin de transmission retenu pour réaliser la transmission de ce trafic, le parcours de la liste est stoppé et une optimisation sous contrainte, que nous détaillerons plus loin en relation avec la Fig. 4, est lancée pour déterminer quelles transmissions doivent être acceptées.

On peut noter que les étapes 134, 135, 136 et 138 de l'algorithme de la Fig. 2 constituent une procédure simplifiée de détermination des demandes de transmission à autoriser. Cette procédure simplifiée permet d'éviter la mise en oeuvre d'une optimisation sous contrainte, qui est une procédure complexe ayant un coût calculatoire élevé. Nous verrons par la suite que lorsque la topologie du réseau est modifiée, l'étape 137 d'optimisation sous contrainte est mise en oeuvre directement sans mettre en oeuvre la procédure simplifiée.

La **Fig. 3** donne une représentation détaillée d'un exemple d'algorithme mettant en oeuvre l'étape 136. Comme nous l'avons vu plus haut, chaque demande de transmission est associée à une information représentant un noeud source et une information représentant au moins un noeud destinataire. En utilisant un protocole de type LSR, il est possible de connaître le meilleur chemin de transmission reliant le noeud source à un noeud destinataire. Ce meilleur chemin de transmission est le chemin de transmission retenu pour toute transmission entre un noeud source et un noeud destinataire. Ce protocole permet de mettre à jour périodiquement la topologie du réseau.

L'algorithme de la Fig. 3 commence par l'initialisation, lors d'une étape 13601, d'une variable $n$ à la valeur « 0 ». Cette variable sert à parcourir un ensemble de $N$ chemins de transmission que doit suivre un trafic donné. Si un trafic est destiné à un seul noeud destinataire, comme c'est le cas en point-à-point, un seul chemin de transmission est considéré ($N=1$). Si un trafic est destiné à $N(N>1)$ noeuds destinataires, comme c'est le cas en point-multipoint, $N$ chemins de transmission sont considérés. Lors d'une étape 13603, le noeud maître détermine si tous les chemins de transmission pris par un trafic $t$ ont été envisagés. Si ce n'est pas le cas, les caractéristiques du chemin de transmission d'indice $n$ sont déterminées par le noeud maître lors d'une étape 13605. Un chemin de transmission est associé à des noeuds qu'il traverse et à des liens reliant les noeuds traversés. On suppose que les capacités de chaque lien sont connues lors de cette étape par une extension du protocole LSR. En considérant qu'un chemin de transmission comprend $L_c(L_c{\geq}1)$ liens, chaque lien (identifié ci-après grâce à une variable $\lambda$) constituant ce chemin de transmission est associé à une bande passante $BP_{\lambda}$

Afin de parcourir l'ensemble des liens constituant le chemin de transmission d'indice $n$, la variable $\lambda$ représentant

des liens à parcourir est initialisée à la valeur « 0 » par le noeud maître lors d'une étape 13607. Le noeud maître compare ensuite la variable $\lambda$ à $L_c$ pour déterminer si tous les liens ont été pris en compte lors d'une étape 13609. Si des liens restent à prendre en compte, une étape 13611 suit l'étape 13609. Au cours de l'étape 13611, une somme $(r_t + R_\lambda)$ d'un débit $r_t$ associé au trafic $t$ et d'un débit $R_\lambda$ des trafics concurrents existant sur le lien d'indice $\lambda$ est comparée à la bande passante disponible sur le lien d'indice $\lambda$, $BP_\lambda$ par le noeud maître. Les trafics concurrents sont ici des trafics utilisant le lien d'indice $\lambda$ engendrés par des transmissions actives ou correspondant à des demandes de transmission d'indice $d$ déjà considérées par l'algorithme de la Fig. 2. Si la somme est supérieure à la bande passante disponible, le trafic $t$ est considéré comme incompatible avec les capacités du réseau. Sinon, l'algorithme continue avec le calcul de la latence de transmission du trafic $t$ sur le chemin de transmission d'indice $n(LATn)$ lors d'une étape 13613. On suppose ici que la latence de chaque lien $LAT_\lambda$ est connue lors de cette étape par une extension du protocole LSR. La latence du chemin de transmission d'indice $n$ est la somme des latences de tous les liens compris dans le chemin de transmission d'indice $n$. La variable $\lambda$ est ensuite incrémentée d'une unité par le noeud maître pour passer au lien suivant lors d'une étape 13615.

Si, lors de l'étape 13609, le noeud maître constate que tous les liens constituant le chemin de transmission d'indice $n$ ont été pris en compte, le noeud maître compare la latence de transmission $LATn$ du trafic $t$ sur le chemin de transmission d'indice $n$ à la latence $LATt$ pour le trafic $t$. Si la latence calculée lors de l'étape 13613 est supérieure à la latence souhaitée, le trafic $t$ est considéré comme incompatible avec les capacités du réseau. Sinon lors d'une étape 13619, le noeud maître incrémente la variable $n$ d'une unité pour passer au chemin de transmission suivant.

Si, lors de l'étape 13603, tous les chemins de transmission retenus pour la transmission du trafic $t$ ont été pris en compte sans que le trafic $t$ soit considéré comme incompatible avec les capacités du réseau, le trafic t est déclaré compatible avec les capacités courantes du réseau lors d'une étape 13623.

De retour à la Fig. 2, si au moins un trafic lié à une demande en attente dans la liste de demandes en attente est considéré comme incompatible avec les caractéristiques du réseau, une optimisation du nombre de transmissions actives est mise en oeuvre lors de l'étape 137. Cette optimisation est une optimisation sous contrainte.

Soit un ensemble de demandes de transmission. On suppose dans un premier temps que toutes les demandes de transmission sont d'un niveau de criticité égal. Par conséquent, le niveau de criticité n'est ici pas pris en compte pour ordonner les demandes de transmission entre elles. Chaque demande de transmission est associée à un trafic $t$ appartenant à un ensemble de trafics $\mathscr{T}$ de cardinal $\mathrm{card}(\mathscr{T})$. Soit l'ensemble des sous-ensembles de trafics $\mathscr{T}^*$ (de cardinal $\mathrm{card}(\mathscr{T}^*)$) de $\mathscr{T}$ tels que

$$\mathrm{card}(\mathscr{T}^*) \leq \mathrm{card}(\mathscr{T}).$$

L'objectif de l'optimisation est donc de trouver un sous-ensemble de trafic $\mathscr{T}^*$ maximisant $\mathrm{card}(\mathscr{T}^*)$, maximisant donc la quantité de transmissions actives à un instant donné.

Comme évoqué plus haut, on suppose ici pour simplifier qu'une transmission point-multipoint est un ensemble de transmissions point-à-point. Soit $\mathscr{C}_t$ l'ensemble des chemins de transmission possibles dans le réseau maillé utilisable pour un trafic $t$. Un protocole de routage permet d'identifier dans ce réseau le chemin de l'ensemble $\mathscr{C}_t$ minimisant une fonction de coût. Généralement ce chemin de transmission correspond au chemin de transmission le plus court, *i. e.* le chemin de transmission minimisant le nombre de noeuds traversés.

L'algorithme d'optimisation peut prendre deux formes :

- Dans la première forme, on considère qu'un protocole de routage (potentiellement intégré à LSR) donne le meilleur chemin de transmission pour chaque trafic considéré. Les chemins de transmission font ainsi partie des données d'entrée de l'algorithme d'optimisation et ne sont donc pas remis en cause lors de l'optimisation. Seul le choix des trafics à autoriser est la donnée à optimiser pour maximiser le nombre de transmissions actives.
- Dans la seconde forme, les chemins de transmission eux-mêmes font partie des données à optimiser. On optimise alors conjointement la quantité de transmissions actives et les chemins de transmission utilisés par le trafic induit par chaque transmission active.

Dans la première forme, chaque trafic $t$ considéré est associé à un chemin de transmission déterminé par le protocole de routage. Soit

$$c_t \in \mathscr{C}_t$$

le chemin de transmission associé au trafic *t*. Ce chemin de transmission est associé à un ensemble de liens traversés $\mathcal{L}_t$, chaque lien d'indice $\lambda$ de $\mathcal{L}_t$ appartenant à un ensemble $\mathcal{L}$ composé des liens constituant le réseau. D'autre part, chaque trafic est associé à un débit $r_t$ et à une latence désirée *LATt*.

Chaque lien d'indice $\lambda$ du réseau est associé à une variable booléenne $\delta_\lambda^t$ indiquant si le lien est utilisé $(\delta_\lambda^t = 1)$ par le trafic t ou pas $(\delta_\lambda^t = 0)$. De plus, chaque lien est associé à une bande passante maximale $BP_\lambda$ et à une latence $LAT_\lambda$.

L'optimisation sous contrainte nécessite une évaluation d'un coût associé à chaque solution trouvée. Ici le coût $F_{\mathcal{T}*}$ d'une solution correspondant à un sous-ensemble de trafic $\mathcal{T}^*$ est une somme de coûts $f_t$ respectivement associés aux chemins de transmission $c_t$ utilisés pour les trafics *t*.

Dans le domaine des réseaux, il est classique d'utiliser la quantité de noeuds, aussi appelé nombre de sauts (« hop » en terminologie anglo-saxonne), impliqués dans un chemin de transmission pour représenter le coût d'un chemin de transmission. On considère en effet qu'en minimisant le nombre de noeuds impliqués dans un chemin de transmission, on minimise le risque que le trafic traversant ce chemin de transmission perturbe le réseau dans son ensemble. Minimiser le nombre de noeuds traversés par un chemin de transmission revient à minimiser le nombre de liens utilisés par ce chemin de transmission. Une fonction de coût représentant un nombre de liens est donc utilisée.

La fonction de coût $f_t$ associée à un chemin de transmission $c_t$ est alors donnée par :

$$f_t = \sum_{\lambda \in \mathcal{L}_t} \delta_\lambda^t$$

Pour un ensemble de trafic

$$t \in \mathcal{T}^*,$$

le coût global des transmissions sur leur chemin de transmission respectif est donné par :

$$F_{\mathcal{T}*} = \sum_{t \in \mathcal{T}*} \sum_{\lambda \in \mathcal{L}_t} \delta_\lambda^t$$

Le réseau utilisé implique plusieurs types de contraintes comprenant généralement une contrainte de débit et une contrainte de latence. Une contrainte de débit *C1* est telle que le débit cumulé des trafics traversant un lien donné ne doit pas dépasser la bande passante admissible sur ce lien. Cette contrainte s'exprime, par exemple, de la manière suivante :

$$\forall \lambda \in \mathcal{L}, \ \sum_{t \in \mathcal{T}*} \delta_\lambda^t . r_t \leq BP_\lambda \quad \text{(C1)}$$

Une contrainte de latence *C2* est telle que la latence sur le chemin de transmission retenu pour un trafic *t* est compatible avec une latence souhaitée. On exprime cette contrainte, par exemple, de la manière suivante :

$$\forall t \in \mathcal{T}*, \ \sum_{\lambda \in \mathcal{L}_t} \delta_\lambda^t . LAT_\lambda \leq LAT_t \quad \text{(C2)}$$

Pour un nombre de demandes de transmission autorisée donnée, l'algorithme d'optimisation sous contrainte cherche le sous-ensemble de trafics $\mathcal{T}^*$ de taille maximum minimisant la fonction de coût $F_{\mathcal{T}^*}$ tout en restant compatible avec les capacités du réseau. Un troisième type de contrainte est donc une contrainte *C3* de taille d'un sous ensemble de trafics optimal

$$\mathcal{T}_{opt}^*.$$

$$\forall \mathcal{T}*, \ card(\mathcal{T}_{opt}^*) \geq card(\mathcal{T}*) \ \ (C3).$$

La variable à maximiser est la taille du sous-ensemble de trafic $\mathcal{T}^*$ *(i.e.* le cardinal du sous-ensemble de trafic $\mathcal{T}^*$). Si pour cette taille maximale, plusieurs solutions existent, l'algorithme choisit la solution minimisant la fonction de coût. L'optimisation peut donc se résumer de la manière suivante :

$$\mathcal{T}_{opt}^* = \min_{\mathcal{T}* \in \mathcal{T}} F_{\mathcal{T}*}$$

sous

$$\forall \lambda \in \mathcal{L}, \ \sum_{t \in \mathcal{T}*} \delta_\lambda^t . r_t \leq BP_\lambda \ \ (C1),$$

$$\forall t \in \mathcal{T}*, \ \sum_{\lambda \in \mathcal{L}_t} \delta_\lambda^t . LAT_\lambda \leq LAT_t \ \ (C2),$$

$$\forall \mathcal{T}*, \ card(\mathcal{T}_{opt}^*) \geq card(\mathcal{T}*) \ \ (C3).$$

où

$$\mathcal{T}_{opt}^*$$

est le sous-ensemble de trafics optimal, min(x) prend le minimum d'une variable x, $\mathrm{card}(\mathcal{E})$ donne le cardinal d'un ensemble $\mathcal{E}$. Jusque-là, nous avons considéré que toutes les transmissions étaient d'un niveau de criticité égal. En réalité certaines transmissions sont plus critiques que d'autres, et les transmissions les plus critiques sont privilégiées. Le niveau de criticité est donc utilisé pour ordonner les demandes de transmission entre elles. Les demandes de transmission de niveaux de criticité les plus élevés doivent de préférence être maintenues en cas de surcharge du réseau. Une demande de transmission critique est par exemple une demande de transmission contenant une information d'importance élevée, ou encore une demande de transmission d'informations urgentes dont l'intérêt dépend de la date à laquelle elles sont reçues.
La prise en compte du niveau de criticité d'une transmission dans l'optimisation précédente peut se faire par l'ajout d'une contrainte :

$$\forall t_{opt} \in \mathcal{T}_{opt}^*, \ \forall t \in \left\{ \mathcal{T} - \mathcal{T}_{opt}^* \right\}, \ \forall p_t, \forall p_{t_{opt}}, \ p_{t_{opt}} \geq p_t \ \ (C4)$$

où

$$\left\{ \mathscr{T} - \mathscr{T}^{*}_{opt} \right\}$$

est l'ensemble des sous-ensembles de trafics de l'ensemble de trafics $\mathscr{T}$ ne comprenant pas le sous-ensemble de trafics optimal

$$\mathscr{T}^{*}_{opt} \, ,$$

$p_{t_{opt}}$ est un niveau de criticité associé à une transmission comprise dans le sous-ensemble de trafics optimal

$$\mathscr{T}^{*}_{opt}$$

et $p_t$ est un niveau de criticité associé à une transmission comprise dans

$$\left\{ \mathscr{T} - \mathscr{T}^{*}_{opt} \right\}$$

. Cette contrainte empêche qu'une transmission appartenant à l'ensemble optimal ait un niveau de criticité inférieur à une transmission qui n'aurait pas été sélectionnée dans l'ensemble optimal.

Dans un mode de réalisation, d'autres contraintes peuvent être envisagées comme par exemple, une contrainte dépendant de marges, une contrainte dépendant d'une tolérance aux défaillances par routage secondaire, une contrainte dépendant d'un temps maximal d'interruption d'un trafic, une contrainte dépendant d'un temps d'accès réseau, etc.

La **Fig. 4** correspond à l'étape 137 illustrée dans la Fig. 2 et donne un exemple d'optimisation de l'ensemble de trafics autorisés. L'optimisation débute par une étape 13701 au cours de laquelle des caractéristiques du réseau sont obtenues par le noeud maître, notamment le nombre de noeuds dans le réseau, la bande passante et la latence de liens du réseau. De plus lors de cette étape, le noeud maître obtient l'ensemble des demandes de transmission comprenant les demandes acceptées correspondant à des transmissions actives en cours et les demandes en attente non acceptées.

L'optimisation se poursuit par une définition des contraintes à respecter lors de l'optimisation au cours d'une étape 13703. Dans le cas de trafics de niveaux de criticité égaux, seules les contraintes *C1, C2* et *C3* sont à respecter. Dans le cas de niveaux de criticité inégaux, la contrainte *C4* est à ajouter.

Lors d'une étape 13705, le sous-ensemble de trafics optimal

$$\mathscr{T}^{*}_{opt}$$

associé aux demandes de transmission acceptées est initialisé à l'ensemble vide. Cette étape est suivie, lors d'une étape 13707, par la construction de la fonction de coût $F_{\mathscr{T}*}$ décrite ci-dessus et, lors d'une étape 13709, par l'initialisation d'une variable *x* à la valeur « 1 ». La variable *x* est utilisée pour rechercher le cardinal du sous-ensemble $\mathscr{T}^{*}$ optimal. En prenant *x*=1, on suppose que, suite à l'algorithme de la Fig. 2, le noeud maître a pu déduire que toutes les demandes de transmission ne peuvent être honorées, et qu'au moins une demande de transmission doit être refusée. On peut remarquer que si l'optimisation avait été lancée sans passer par la procédure de détermination des demandes de transmission à autoriser simplifiée des étapes 134, 135, 136 et 138, la variable *x* aurait débuté à 0 pour vérifier si toutes les transmissions (en cours ou en attente) peuvent être acceptées.

Lors d'une étape 13711, le noeud maître calcule le cardinal du sous-ensemble de trafics $\mathscr{T}^{*}$ dans cette itération

$$(\mathrm{card}(\mathscr{T}^*)=\mathrm{card}(\mathscr{T})\text{-}x),$$

puis le noeud maître vérifie que ce nouveau cardinal est bien au moins égal au cardinal d'un sous-ensemble de trafics $\mathscr{T}^0$ correspondant à des demandes de transmission de niveau de criticité élevé devant impérativement être acceptées.

Si une valeur de cardinal du sous-ensemble de trafics $\mathscr{T}^*$ inférieure au cardinal du sous-ensemble de trafics $\mathscr{T}^0$ est obtenue, cela signifie qu'aucune solution compatible avec les contraintes n'a pu être trouvée. Dans ce cas, l'algorithme se termine par une étape 13733. Lors de l'étape 13733, une notification est envoyée à chaque noeud de manière à ce que chaque opérateur associé à l'un des noeuds soit informé de la situation pour, par exemple, alerter chaque opérateur que les communications sur le réseau risquent d'être dégradées. Dans un mode de réalisation, lors de l'étape 13733, le sous-ensemble des trafics autorisés est le sous-ensemble de trafics $\mathscr{T}^0$.

Si le cardinal du sous-ensemble de trafic $\mathscr{T}^*$ est supérieur ou égal au cardinal du sous-ensemble $\mathscr{T}^0$, une variable $n_{\mathscr{T}*}$ est initialisée à la valeur « 0 ». Cette variable est utilisée pour parcourir l'ensemble des sous-ensembles de trafics $\mathscr{T}^*$ de taille $\mathrm{card}(\mathscr{T}^*)$ possibles de l'ensemble de trafics $\mathscr{T}$.

L'optimisation se poursuit par l'initialisation d'une variable *Min* à une valeur *MIN*. Le noeud maître prend une valeur *MIN* suffisamment grande pour assurer que toute valeur de la variable *Min* calculée dans l'algorithme soit inférieure à la valeur *MIN*. Nous proposons à titre d'exemple, une valeur *MIN* calculée à partir de la formule de calcul du coût $F_{\mathscr{T}*}$ en fixant $\delta_\lambda^t$ à la valeur « 1 ». On ajoute la valeur « 1 » au résultat de ce calcul pour assurer qu'aucun coût $F_{\mathscr{T}*}$ ne pourra atteindre cette valeur. :

$$MIN = \left( \sum_{t \in \mathscr{T}} \sum_{\lambda \in \mathcal{L}} 1 \right) + 1$$

Lors d'une étape 13719, le noeud maître vérifie si tous les sous-ensembles de trafics $\mathscr{T}^*$ de taille $\mathrm{card}(\mathscr{T}^*)$ de l'ensemble de trafic $\mathscr{T}$ ont été pris en compte. Le nombre total de sous-ensembles de trafics possibles $\mathscr{T}^*$ de l'ensemble de trafics $\mathscr{T}$ est donné par le coefficient binomial

$$C_{card(\mathscr{T})}^{card(\mathscr{T}*)}.$$

Si des sous-ensembles de trafics restent à prendre en compte, la valeur du coût du sous-ensemble de trafic $\mathscr{T}^*$ courant est calculée et comparée à la variable *Min* lors d'une étape 13721. Si le coût $F_{\mathscr{T}*}$ du sous-ensemble de trafic $\mathscr{T}^*$ courant est inférieur à la valeur de la variable *Min,* cette étape est suivie d'une étape 13722 au cours de laquelle la compatibilité du sous-ensemble de trafic $\mathscr{T}^*$ considéré avec l'ensemble des contraintes est vérifiée. Si c'est le cas, la variable *Min* prend la valeur courante de la fonction de coût $F_{\mathscr{T}*}$ lors d'une étape 13723 et le sous-ensemble de trafics optimal

$$\mathscr{T}_{opt}^*$$

prend la valeur du sous-ensemble de trafics $\mathscr{T}^*$ lors d'une étape 13725. Dans tous les cas, les étapes 13721 et 13722 sont suivies d'une étape 13727 qui permet d'incrémenter la variable $n_{\mathscr{T}*}$ d'une unité.

Si tous les sous-ensembles de trafics $\mathscr{T}^*$ de l'ensemble de trafics $\mathscr{T}$ ont été parcourus sans trouver au moins un sous-ensemble compatible avec les contraintes, lors d'une étape 13728, le noeud maître diminue le cardinal du sous-ensemble de trafics $\mathcal{T}^*$ en augmentant la variable x d'une unité lors d'une étape 13731 puis en revenant à l'étape 13711. Par contre si au moins une solution a été trouvée, l'algorithme se termine lors d'une étape 13729 et le sous-ensemble de trafics optimal

$$\mathcal{T}^*_{opt}$$

calculé lors de l'étape 13725 est conservé. Ce sous-ensemble indique l'ensemble des demandes de transmission à accepter.

Dans une mise en oeuvre particulière de l'optimisation de l'ensemble des transmissions autorisées de la Fig. 4, une contrainte supplémentaire peut être ajoutée dans l'étape 13722. L'objectif de cette contrainte supplémentaire est de minimiser les perturbations induites par un changement dans le réseau. Pour ce faire, le noeud maître tente de préserver les demandes de transmission actives en cours. Ainsi, si les conditions sur le réseau le permettent, les transmissions en cours peuvent se poursuivre jusqu'à leur terme. Pour ce faire, une mise en oeuvre particulière de l'algorithme de la Fig. 4 consiste à allouer un niveau de criticité élevé aux demandes de transmission actives. Ainsi, le noeud maître fixe le niveau de criticité $p$ des demandes de transmission actives en cours de la manière suivante :

$$P_1 < p < P_2$$

où $P_1$ est le niveau de criticité maximum parmi les demandes de transmission ne devant pas impérativement être honorées, et $P_2$ est le niveau de criticité minimum des demandes de transmission devant impérativement être honorées.

On peut noter qu'une version sous-optimale de l'optimisation sous contrainte décrite en relation avec la Fig. 4 peut être utilisée. Dans cette solution, l'optimisation de l'ensemble des trafics autorisés de la Fig. 4 peut être arrêtée à tout moment par le noeud maître dès qu'au moins un sous-ensemble de trafics $\mathcal{T}^*$ compatible avec les contraintes est trouvé. Cet arrêt peut être provoqué par un utilisateur ou suite à l'expiration d'un temps prédéfini d'exécution maximum de la procédure d'optimisation sous contrainte. Cette solution a donc l'avantage de réduire le coût calculatoire de l'optimisation par rapport à une optimisation complète. La solution obtenue au moment de l'arrêt de l'optimisation maximise la quantité de transmissions actives sur le réseau à un instant donné, mais n'est pas nécessairement la solution minimisant la fonction de coût $F_{\mathcal{T}*}$.

Dans un mode de réalisation, on considère qu'aucun protocole de routage n'a permis d'associer chaque trafic à un chemin de transmission. Dans ce mode de réalisation, le noeud maître optimise conjointement la quantité de transmissions actives et les chemins de transmission utilisés par le trafic associé à chaque transmission. Dans un mode de réalisation, l'étape 13721 est modifiée. Lors de l'étape 13721 modifié, une optimisation est mise en oeuvre de manière à associer chaque trafic compris dans le sous ensemble de trafics $\mathcal{T}^*$ à un chemin de transmission minimisant une fonction de coût, parmi les chemins de transmission possibles pour ce trafic. La fonction de coût $F_{\mathcal{T}*}$ est calculée une fois que chaque trafic du sous ensemble de trafics $\mathcal{T}^*$ est associé à un chemin de transmission de coût minimal.

L'algorithme décrit en relation avec la Fig. 4 est quasiment exhaustif puisqu'il examine quasiment toutes les solutions possibles et ne s'arrête que lorsqu'une solution compatible avec les contraintes est trouvée ou lorsqu'aucune autre solution que le sous ensemble $\mathcal{T}^0$ n'est trouvée. Cet algorithme quasi-exhaustif est envisageable tant que le nombre de transmissions envisagé est faible. Lorsque le nombre de demandes de transmission est élevé ou lorsque l'optimisation concerne l'optimisation conjointe de la quantité de transmissions actives et des chemins de transmission empruntés par le trafic associé à chaque transmission, cet algorithme peut avoir un coût calculatoire important. Dans un mode de réalisation, l'algorithme décrit en relation avec la Fig. 4 est remplacé avantageusement par un algorithme par séparation et évaluation également appelé selon le terme anglophone « *branch and bound* ». L'algorithme par séparation et évaluation est une approche générique de résolution de problèmes d'optimisation, et plus particulièrement d'optimisation discrète. Une particularité de cette approche est qu'elle évite d'analyser exhaustivement toutes les solutions possibles à un problème, tout en permettant de trouver une solution optimale.

De retour à la Fig. 1, l'étape 15 de mise à jour des transmissions est décrite en détail en relation avec la **Fig. 5.** La Fig. 5 reprend la Fig. 2 et conserve les étapes 133 à 138. Toutefois, les étapes 131 et 132 sont remplacées par une étape unique 151 de mise à jour de la liste des demandes de transmission. Lors de cette étape, la liste des demandes de transmission en attente reste inchangée. Par contre, la (ou les) transmission(s) qui a (ont) pris fin est (sont) retirée(s) de la liste des transmissions actives. La suite de l'algorithme de la Fig. 5 est en tout point identique à la suite de l'algorithme de la Fig. 2.

La **Fig. 6** représente les modifications apportées à l'algorithme de la Fig. 2 pour gérer les modifications de liens existants correspondant à l'étape 17 de la Fig. 1. Les étapes 131 et 132 sont remplacées par une étape 171 d'obtention de la liste combinée des transmissions actives et des demandes de transmission en attente. La suite de l'algorithme est en tout point identique à l'algorithme de la Fig. 2. Les modifications de liens apparaissent lors de l'étape 13701 de la Fig. 4 sous forme de modifications des caractéristiques de certains liens, voire de modifications de la liste $\mathcal{L}$ des liens disponibles sur le réseau. Dans ce dernier cas, par exemple, certains noeuds du réseau sont hors de portée des autres noeuds du réseau. Dans ce cas, les liens menant à ces noeuds peuvent être supprimés de la liste $\mathcal{L}$. Dans une autre mise en oeuvre, le noeud maître pourra donner à ces liens des caractéristiques particulières comme une bande passante $BP_\lambda$ nulle et une latence $LAT_\lambda$ infinie. Cette mise en oeuvre permet de gérer plus facilement les noeuds qui sont temporairement hors de portée des autres noeuds du réseau. En effet, dans ce cas, les liens menant à ces noeuds apparaissent toujours dans la liste $\mathcal{L}$ des liens existants. Toutefois, lorsque des noeuds sont hors de portée, les caractéristiques des liens qui leurs sont associés sont telles que ces liens ne sont jamais sélectionnés pour réaliser une transmission.

On notera que l'étape 17 de vérification de la compatibilité des transmissions existantes avec les nouvelles caractéristiques du réseau ne peut pas appliquer la procédure de détermination des demandes de transmission à autoriser simplifiée des étapes 134, 135, 136 et 138 de la Fig. 2. En effet, dans ce cas, la topologie du réseau a changé. Or, l'application des étapes 134, 135, 136 et 138 n'est possible que lorsque la topologie est stable. Au moins une partie des chemins de transmission est donc à revoir. Dans ce cas, l'étape 171 est suivie directement par l'étape 137 d'optimisation sous contrainte.

L'apparition d'un ou plusieurs nouveaux noeuds dans le réseau correspondant à l'étape 19 de la Fig. 1 est traitée par l'algorithme de la **Fig. 6.** La prise en compte des nouveaux liens apparaît lors de l'étape 13701 de la Fig. 4. Dans ce cas, les nouveaux liens sont ajoutés à la liste $\mathcal{L}$ des liens disponibles sur le réseau. Le reste de la mise en oeuvre de l'étape 19 est en tout point identique à la mise en oeuvre de l'étape 17.

La **Fig. 7** illustre schématiquement un exemple d'architecture matérielle d'un dispositif 700 apte à mettre en oeuvre un noeud du réseau et notamment le noeud maître selon la présente invention. Le dispositif 700 comporte alors, reliés par un bus de communication 710 : un processeur ou CPU (« Central Processing Unit » en anglais) 701 ; une mémoire vive RAM (« Random Access Memory » en anglais) 702 ; une mémoire morte ROM (« Read Only Memory » en anglais) 703 ; une unité de stockage 704 ou un lecteur de support de stockage, tel qu'un lecteur de cartes SD (« Secure Digital » en anglais) ou un disque dur HDD (« Hard Disk Drive » en anglais) ; un capteur optronique 706 capable d'acquérir des données de type image, vidéo, audio ou d'autres informations et un ensemble d'interfaces 705 permettant de recevoir des données issues d'un ou plusieurs autres noeuds et de fournir des données issues du capteur optronique à d'autres noeuds, par exemple par le biais d'un réseau de communication tel que le réseau Ad-Hoc mobile décrit en relation avec la Fig. 8.

Le processeur 701 est capable d'exécuter des instructions chargées dans la RAM 702 à partir de la ROM 703, d'une mémoire externe (non représentée), d'un support de stockage, ou d'un réseau de communication (non représenté). Lorsque le dispositif 700 est mis sous tension, le processeur 701 est capable de lire de la RAM 702 des instructions et de les exécuter. Ces instructions forment un programme d'ordinateur causant la mise en oeuvre, par le processeur 701, de tout ou partie des algorithmes et étapes décrits ci-dessus.

Tout ou partie des algorithmes et étapes décrits ci-dessus peut ainsi être implémenté sous forme logicielle par exécution d'un ensemble d'instructions par une machine programmable, tel qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais). Cela signifie que seule une partie desdits modules peut être mise en oeuvre sous forme logicielle alors que le reste desdits modules peut être mis en oeuvre sous forme matérielle.

**Revendications**

1. Procédé de maximisation d'une quantité de demandes de transmission autorisées parmi un ensemble de demandes de transmission dans un réseau sans fil mobile comprenant une pluralité de noeuds mobiles reliés par des liens, chaque lien étant associé à des capacités comprenant une bande passante et une latence, chaque transmission devant s'opérer sur un chemin de transmission et étant associée à des caractéristiques comprenant un débit et une latence maximale admissibles, ledit procédé étant mis en oeuvre par un noeud maître et étant **caractérisé en ce**

**qu'**il est activé sur réception (11) par le noeud maître d'un évènement appartenant à un ensemble prédéfini d'évènements, l'ensemble prédéfini d'événements comprenant un premier type d'événement (12, 14) impliquant une modification de topologie du réseau, et **en ce qu'**il comprend les étapes suivantes:

- obtenir (132) un ensemble de demandes de transmission,
- si l'événement est du premier type, mettre en oeuvre (137) une procédure d'optimisation sous contrainte comprenant les étapes suivantes :

  ◦ définir (13703) des contraintes comprenant des contraintes de débit et de latence en fonction des capacités de chaque lien impliqué dans chaque chemin de transmission retenu pour chaque demande de transmission de l'ensemble de demandes de transmission,
  ◦ définir (13719) au moins un sous-ensemble de l'ensemble de demandes de transmission,
  ◦ associer (13721) chaque sous-ensemble défini avec une fonction de coût, la fonction de coût associée à un sous-ensemble prenant en compte les chemins de transmission retenus pour les demandes de transmission respectives comprises dans le sous-ensemble,
  ◦ déterminer un sous-ensemble de cardinalité maximale compatible avec les contraintes définies et minimisant la fonction de coût, le sous-ensemble déterminé représentant les demandes de transmission à autoriser.

2. Procédé selon la revendication 1, **caractérisé en ce que** l'ensemble prédéfini comprend un second type d'événement (16, 18) n'impliquant aucune modification de topologie du réseau, la détermination du sous-ensemble de cardinalité maximum compatible avec les contraintes définies dans le cadre d'un évènement du deuxième type utilise une procédure de détermination des demandes de transmission à autoriser simplifiée (134, 135, 136, 138), la mise en oeuvre de la procédure d'optimisation sous contrainte dépendant du résultat de la procédure de détermination des demandes de transmission à autoriser simplifiée.

3. Procédé selon l'une des revendications 1 ou 2, **caractérisé en ce que** les caractéristiques d'une demande de transmission comprennent de plus un niveau de criticité permettant d'ordonner le traitement des demandes de transmission entre elles, les niveaux de criticité respectifs des demandes de transmission d'un sous-ensemble donné étant pris en compte par le procédé sous forme d'une contrainte supplémentaire permettant d'assurer que le sous-ensemble déterminé comprend les demandes de transmission de l'ensemble des demandes de transmission associées à des niveaux de criticité les plus élevés.

4. Procédé selon l'une quelconque des revendications précédentes, **caractérisé en ce que** chaque chemin de transmission retenu pour une demande de transmission appartenant à un sous-ensemble de demande de transmission donné est associé à un coût dépendant d'une quantité de noeuds traversés par le chemin de transmission, la fonction de coût d'un sous-ensemble de demandes de transmission donné étant la somme des coûts associés aux chemins de transmission retenus pour chaque demande de transmission comprise dans le sous-ensemble de demandes de transmission donné.

5. Procédé selon l'une quelconque des revendications précédentes, **caractérisé en ce que** la procédure d'optimisation sous contrainte comprend une recherche de chemins de transmission optimaux pour chaque demande de transmission.

6. Procédé selon l'une quelconque des revendications précédentes, **caractérisé en ce que** l'ensemble des demandes de transmission comprend des demandes autorisées associées à des transmissions en cours et des demandes en attente.

7. Procédé selon l'une quelconque des revendications précédentes, **caractérisé en ce que** chaque noeud du réseau comprend un capteur optronique capable d'acquérir des informations comprenant des données de type image et vidéo, les transmissions mises en oeuvre par le procédé étant des transmissions de ces informations.

8. Procédé selon l'une quelconque des revendications précédentes, **caractérisé en ce que** le premier type d'événement correspond à des événements relatifs à :

- une modification d'au moins une caractéristique d'un lien du réseau, ou
- une apparition de nouveau noeud dans le réseau.

**9.** Procédé selon l'une quelconque des revendications précédentes, **caractérisé en ce que** le second type d'événement correspond à des événements relatifs à :

• une réception d'une nouvelle demande de transmission de la part d'un noeud source ou d'un noeud destinataire sans modification de topologie du réseau, ou
• une fin d'une transmission active sans modification de topologie du réseau.

**10.** Procédé selon l'une quelconque des revendications précédentes, **caractérisé en ce que** le sous-ensemble déterminé est le sous-ensemble de cardinalité maximale compatible avec l'ensemble des contraintes définies et minimisant la fonction de coût à un moment d'arrêt de la procédure d'optimisation sous contrainte.

**11.** Dispositif de communication apte à maximiser une quantité de demandes de transmission autorisées parmi un ensemble de demandes de transmission dans un réseau sans fil mobile comprenant une pluralité de dispositifs de communication reliés par des liens, chaque lien étant associé à des capacités comprenant une bande passante et une latence, chaque transmission devant s'opérer sur un chemin de transmission et étant associée à des caractéristiques comprenant un débit et une latence maximale admissibles, ledit dispositif étant **caractérisé en ce qu'**il comprend :

• des moyens (11) pour recevoir des événements,
• des moyens (12, 14, 16, 18) pour déterminer un type d'un évènement reçu dans un ensemble prédéfini d'événements, l'ensemble prédéfini d'événements comprenant un premier type d'événement (12, 14) impliquant une modification de topologie du réseau,
• des moyens (132) pour obtenir un ensemble de demandes de transmission, et
• des moyens (137) pour optimiser sous contrainte comprenant:

◦ des moyens (13703) pour définir des contraintes comprenant des contraintes de débit et de latence en fonction des capacités de chaque lien impliqué dans chaque chemin de transmission retenu pour chaque demande de transmission de l'ensemble de demandes de transmission obtenu,
◦ des moyens (13719) pour définir des sous-ensembles de l'ensemble de demandes de transmission obtenu,
◦ des moyens (13721) pour associer chaque sous-ensemble défini avec une fonction de coût, la fonction de coût associée à un sous-ensemble prenant en compte les chemins de transmission retenus pour les demandes de transmission respectives comprises dans le sous-ensemble, et
◦ des moyens pour déterminer parmi les sous-ensembles définis, un sous-ensemble de cardinalité maximale compatible avec les contraintes définies et minimisant la fonction de coût associée, le sous-ensemble déterminé représentant les demandes de transmission à autoriser.

**12.** Système de communication comprenant une pluralité de dispositifs de communication mobiles communicant selon un mode de communication sans fils, et comprenant un dispositif de communication selon la revendication 11.

**Patentansprüche**

**1.** Verfahren zur Maximierung einer Menge von erlaubten Übertragungsanfragen unter einer Einheit von Übertragungsanfragen in einem drahtlosen Mobilfunknetz, das eine Vielzahl von durch Links verbundenen beweglichen Knoten enthält, wobei jeder Link Kapazitäten zugeordnet ist, die eine Bandbreite und eine Latenz enthalten, wobei jede Übertragung auf einem Übertragungspfad durchgeführt werden muss und Merkmalen zugeordnet ist, die einen zulässigen Durchsatz und eine zulässige maximale Latenz enthalten, wobei das Verfahren von einem Master-Knoten durchgeführt wird und **dadurch gekennzeichnet ist, dass** es bei Empfang (11) eines Ereignisses durch den Master-Knoten aktiviert wird, das zu einer vordefinierten Einheit von Ereignissen gehört, wobei die vordefinierte Einheit von Ereignissen einen ersten Ereignistyp (12, 14) enthält, der eine Topologieänderung des Netzes impliziert, und dass es die folgenden Schritte enthält:

• Erhalt (132) einer Einheit von Übertragungsanfragen,
• wenn das Ereignis vom ersten Typ ist, Durchführen (137) einer Prozedur einer Optimierung unter Nebenbedingungen, die die folgenden Schritte enthält:

◦ Definieren (13703) der Nebenbedingungen, die Durchsatz- und Latenz-Nebenbedingungen abhängig von den Kapazitäten jedes Links enthalten, der in jedem Übertragungspfad impliziert ist, der für jede Übertragungsanfrage der Einheit von Übertragungsanfragen gewählt wird,
∘ Definieren (13719) mindestens einer Teileinheit der Einheit von Übertragungsanfragen,
∘ Zuordnen (13721) jeder definierten Teileinheit zu einer Kostenfunktion, wobei die einer Teileinheit zugeordnete Kostenfunktion die gewählten Übertragungspfade für die jeweiligen Übertragungsanfragen berücksichtigt, die in der Teileinheit enthalten sind,
∘ Bestimmen einer Teileinheit maximaler Kardinalität, die mit den definierten Nebenbedingungen kompatibel ist und die zugeordnete Kostenfunktion minimiert, wobei die bestimmte Teileinheit die zu erlaubenden Übertragungsanfragen darstellt.

2. Verfahren nach Anspruch 1, **dadurch gekennzeichnet, dass** die vordefinierte Einheit einen zweiten Ereignistyp (16, 18) enthält, der keine Topologieänderung des Netzes impliziert, wobei die Bestimmung der Teileinheit maximaler Kardinalität, die mit den im Rahmen eines Ereignisses des zweiten Typs definierten Nebenbedingungen kompatibel ist, eine vereinfachte Bestimmungsprozedur der zu erlaubenden Übertragungsanfragen (134, 135, 136, 138) verwendet, wobei die Durchführung der Prozedur der Optimierung unter Nebenbedingungen vom Ergebnis der vereinfachten Bestimmungsprozedur der zu erlaubenden Übertragungsanfragen abhängt.

3. Verfahren nach einem der Ansprüche 1 oder 2, **dadurch gekennzeichnet, dass** die Merkmale einer Übertragungsanfrage außerdem einen Kritikalitätspegel enthalten, der es ermöglicht, die Verarbeitung der Übertragungsanfragen untereinander zu ordnen, wobei die jeweiligen Kritikalitätspegel der Übertragungsanfragen einer gegebenen Teileinheit vom Verfahren in Form einer zusätzlichen Nebenbedingung berücksichtigt werden, die es ermöglicht zu gewährleisten, dass die bestimmte Teileinheit die Übertragungsanfragen der Einheit der Übertragungsanfragen enthält, die höchsten Kritikalitätspegeln zugeordnet sind.

4. Verfahren nach einem der vorhergehenden Ansprüche, **dadurch gekennzeichnet, dass** jeder für eine Übertragungsanfrage, die zu einer gegebenen Teileinheit einer Übertragungsanfrage gehört, gewählte Übertragungspfad Kosten zugeordnet ist, die von einer Menge von vom Übertragungspfad durchquerten Knoten abhängt, wobei die Kostenfunktion einer gegebenen Teileinheit von Übertragungsanfragen die Summe der Kosten ist, die den gewählten Übertragungspfaden für jede Übertragungsanfrage zugeordnet sind, die in der gegebenen Teileinheit von Übertragungsanfragen enthalten ist.

5. Verfahren nach einem der vorhergehenden Ansprüche, **dadurch gekennzeichnet, dass** die Prozedur der Optimierung unter Nebenbedingungen eine Suche nach optimalen Übertragungspfaden für jede Übertragungsanfrage enthält.

6. Verfahren nach einem der vorhergehenden Ansprüche, **dadurch gekennzeichnet, dass** die Einheit der Übertragungsanfragen laufenden Übertragungen zugeordnete erlaubte Anfragen und wartende Anfragen enthält.

7. Verfahren nach einem der vorhergehenden Ansprüche, **dadurch gekennzeichnet, dass** jeder Knoten des Netzes einen optronischen Sensor enthält, der fähig ist, Informationen zu erfassen, die Daten vom Typ Bild- und Videodaten enthalten, wobei die vom Verfahren durchgeführten Übertragungen Übertragungen dieser Informationen sind.

8. Verfahren nach einem der vorhergehenden Ansprüche, **dadurch gekennzeichnet, dass** der erste Ereignistyp Ereignissen entspricht bezüglich:

   • einer Änderung mindestens eines Merkmals eines Links des Netzes, oder
   • einem Auftreten eines neuen Knotens im Netz.

9. Verfahren nach einem der vorhergehenden Ansprüche, **dadurch gekennzeichnet, dass** der zweite Ereignistyp Ereignissen entspricht bezüglich:

   • eines Empfangs einer neuen Übertragungsanfrage von einem Ausgangsknoten oder einem Zielknoten ohne Topologieänderung des Netzes, oder
   • eines Endes einer aktiven Übertragung ohne Topologieänderung des Netzes.

10. Verfahren nach einem der vorhergehenden Ansprüche, **dadurch gekennzeichnet, dass** die bestimmte Teileinheit die Teileinheit maximaler Kardinalität ist, die mit der Einheit der definierten Nebenbedingungen kompatibel ist und die Kostenfunktion auf einen Moment des Anhaltens der Prozedur der Optimierung unter Nebenbedingungen minimiert.

**11.** Kommunikationsvorrichtung, die eine Menge von erlaubten Übertragungsanfragen unter einer Einheit von Übertragungsanfragen in einem drahtlosen Mobilfunknetz maximieren kann, das eine Vielzahl von durch Links verbundene Kommunikationsvorrichtungen enthält, wobei jeder Link Kapazitäten zugeordnet ist, die eine Bandbreite und eine Latenz enthalten, wobei jede Übertragung auf einem Übertragungspfad durchgeführt werden muss und Merkmalen zugeordnet ist, die einen zulässigen Durchsatz und eine zulässige maximale Latenz enthalten, wobei die Vorrichtung **dadurch gekennzeichnet ist, dass** sie enthält:

- Einrichtungen (11) zum Empfang von Ereignissen,
- Einrichtungen (12, 14, 16, 18) zum Bestimmen eines empfangenen Ereignistyps in einer vordefinierten Einheit von Ereignissen, wobei die vordefinierte Einheit von Ereignissen einen ersten Ereignistyp (12, 14) enthält, der eine Topologieänderung des Netzes impliziert,
- Einrichtungen (132) zum Erhalt einer Einheit von Übertragungsanfragen, und
- Einrichtungen (137) zum Optimieren unter Nebenbedingungen, die enthalten:

  ○ Einrichtungen (13703), um Nebenbedingungen zu definieren, die Durchsatz- und Latenz-Nebenbedingungen abhängig von den Kapazitäten jedes Links enthalten, der in jedem Übertragungspfad impliziert ist, der für jede Übertragungsanfrage der Einheit von Übertragungsanfragen gewählt wird,
  ○ Einrichtungen (13719), um Teileinheiten der erhaltenen Einheit von Übertragungsanfragen zu definieren,
  ○ Einrichtungen (13721), um jede definierte Teileinheit einer Kostenfunktion zuzuordnen, wobei die einer Teileinheit zugeordnete Kostenfunktion die gewählten Übertragungspfade für die jeweiligen Übertragungsanfragen berücksichtigt, die in der Teileinheit enthalten sind, und
  ○ Einrichtungen, um unter den definierten Teileinheiten eine Teileinheit maximaler Kardinalität zu bestimmen, die mit den definierten Nebenbedingungen kompatibel ist und die zugeordnete Kostenfunktion minimiert, wobei die bestimmte Teileinheit die zu erlaubenden Übertragungsanfragen darstellt.

**12.** Kommunikationssystem, das eine Vielzahl von von mobilen Kommunikationsvorrichtungen, die gemäß einem drahtlosen Kommunikationsmodus kommunizieren, und eine Kommunikationsvorrichtung nach Anspruch 11 enthält.

**Claims**

**1.** Method for maximising a quantity of authorised transmission requests among a set of transmission requests in a mobile wireless network comprising a plurality of mobile nodes connected by links, each link being associated with capacities comprising a bandwidth and a latency, each transmission having to take place on a transmission path and being associated with characteristics comprising a maximum allowable transmission rate and latency, said method being implemented by a master node and being **characterised in that** it is activated on reception (11) by the master node of an event belonging to a predefined set of events, the predefined set of events comprising a first type of event (12, 14) involving a change in topology of the network, and **in that** it comprises the following steps:

- obtaining (132) a set of transmission requests;
- if the event is of the first type, executing (137) a constrained optimisation procedure comprising the following steps:

  ○ defining (13703) constraints comprising transmission rate and latency constraints according to the capacities of each link involved in each transmission path adopted for each transmission request in the set of transmission requests,
  ○ defining (13719) at least one subset of the set of transmission requests,
  ○ associating (13721) each defined subset with a cost function, the cost function associated with a subset taking into account the transmission paths adopted for the respective transmission requests included in the subset,
  ○ determining a maximum-cardinality subset compatible with the defined constraints and minimising the cost function, the subset determined representing the transmission requests to be authorised.

**2.** Method according to claim 1, **characterised in that** the predefined set comprises a second type of event (16, 18) not involving any modification to the topology of the network, the determination of the maximum-cardinality subset compatible with the defined constraints in the context of an event of the second type uses a simplified procedure (134, 135, 136, 138) for determining the transmission requests to be authorised, the implementation of the constrained optimisation procedure being dependent on the result of the simplified procedure for determining the transmission requests to be authorised.

3. Method according to either claim 1 or claim 2, **characterised in that** the characteristics of a transmission request also comprise a criticality level making it possible to sequence the processing of the transmission requests with respect to one another, the respective criticality levels of the transmission requests of a given subset being taken into account by the method in the form of a supplementary constraint making it possible to ensure that the determined subset comprises the transmission requests of all the transmission requests associated with the highest criticality levels.

4. Method according to any of the preceding claims, **characterised in that** each transmission path adopted for a transmission request belonging to a given subset of transmission requests is associated with a cost dependent on a quantity of nodes through which the transmission path passes, the cost function of a given subset of transmission requests being the sum of the costs associated with the transmission paths adopted for each transmission request included in the given subset of transmission requests.

5. Method according to any of the preceding claims, **characterised in that** the constrained optimisation procedure comprises a search for optimum transmission paths for each transmission request.

6. Method according to any of the preceding claims, **characterised in that** all the transmission requests comprise authorised requests associated with current transmissions and waiting requests.

7. Method according to any of the preceding claims, **characterised in that** each node in the network comprises an optronic sensor capable of acquiring information comprising data of the image and video type, the transmissions used by the method being transmissions of this information.

8. Method according to any of the preceding claims, **characterised in that** the first type of event corresponds to events relating to:

• a change to at least one characteristic of a link in the network, or
• an appearance of a new node in the network.

9. Method according to any of the preceding claims, **characterised in that** the second type of event corresponds to events relating to:

• reception of a new transmission demand from a source node or from a destination node without change to the topology of the network, or
• an end of an active transmission without change to the topology of the network.

10. Method according to any of the preceding claims, **characterised in that** the determined subset is the maximum cardinality subset compatible with all the defined constraints and minimising the cost function at a moment of stopping the constrained optimisation procedure.

11. Communication device able to maximise a quantity of authorised transmission requests among a set of transmission requests in a mobile wireless network comprising a plurality of communication devices connected by links, each link being associated with capacities comprising a bandwidth and a latency, each transmission having to take place on a transmission path and being associated with characteristics comprising a maximum allowable rate and latency, said device being **characterised in that** it comprises:

• means (11) for receiving events;
• means (12, 14, 16, 18) for determining a type of event received in a predefined set of events, the predefined set of events comprising a first type of event (12, 14) involving a change to the topology of the network;
• means (132) for obtaining a set of transmission requests; and
• constrained optimisation means (137) comprising:

○ means (13703) for defining constraints comprising rate and latency constraints according to the capacities of each link involved in each transmission path adopted for each transmission request in the set of transmission requests obtained,
○ means (13719) for defining subsets of the set of transmission requests obtained,

∘ means (13721) for associating each defined subset with a cost function, the cost function associated with a subset taking into account the transmission paths adopted for the respective transmission requests included in the subset, and

∘ means for determining, among the defined subsets, a maximum-cardinality subset compatible with the defined constraints and minimising the associated cost function, the determined subset representing the transmission requests to be authorised.

12. Communication system comprising a plurality of mobile communication devices communicating in accordance with a wireless communication mode, and comprising a communication device according to claim 11.

Fig. 1

```
┌────────────────────────────────────┐
│ Obtention des caractéristiques de la nouvelle │      131
│              demande               │
└────────────────────────────────────┘
                    │
                    ▼
┌────────────────────────────────────┐
│ Insertion de la nouvelle demande dans la liste │      132
│        des demandes en attente      │
└────────────────────────────────────┘
                    │
        133         ▼
              ┌─────────┐
              │   d=0   │
              └─────────┘
                    │        134                              135
                    ▼
               ◇ d<D? ◇ ──── non ────▶ ┌──────────────────────┐
                    │                  │  Demandes acceptées  │
                   oui                 └──────────────────────┘
                    │
                    ▼
┌─────────┐   ◇ Demande d ◇ ── non ──▶ ┌──────────────────────┐
│ d=d+1   │◀── oui ── compatible? ◇    │ Optimisation sous    │
└─────────┘                            │     contrainte       │
    138              136               └──────────────────────┘
                                                137
```

Fig. 2

n=0 — 13601

13623

| Trafic t compatible | ← non — n<N? — 13603

oui — 13605

Détermination du chemin n emprunté par le trafic t

— 13607

$\lambda = 0$

— 13609

$\lambda < L_c$ ? — non → LATn<=LATt ? — 13617 — oui → n=n+1

13615 — $\lambda = \lambda + 1$

oui

$r_t + R \le BP_\lambda$ ? — 13611 — non → Trafic t incompatible

non — 13619

oui

LATn=LATn + LAT$\lambda$ — 13613

13621

Fig. 3

22

13701 — Obtention d'informations sur le réseau

13703 — Définition des contraintes

13705 — $\mathcal{T}_{opt}^* = \varnothing$

13707 — Construction de la fonction de coût

13709 — x=1

13711 — card($\mathcal{T}^*$)= card($\mathcal{T}$) - x

13733 — Pas de solution

non

card($\mathcal{T}^*$) $\geq$ card($\mathcal{T}^0$) ? — 13713

oui

13715 — $n_{\mathcal{T}^*} = 0$

13717 — Min=MIN

13731 — x=x+1

13727 — $n_{\mathcal{T}^*} = n_{\mathcal{T}^*} + 1$

13719 — $n_{\mathcal{T}^*} < C_{card(\mathcal{T})}^{card(\mathcal{T}^*)}$ ?

non — $\mathcal{T}_{opt}^* \neq \varnothing$ — 13728

13729 — Solution trouvée

oui

13721 — $F_{\mathcal{T}^*} < Min$ ?

oui — Contraintes respectées? — 13722

oui — $Min = F_{\mathcal{T}^*}$ — 13723

non — non

$\mathcal{T}_{opt}^* = \mathcal{T}^*$

13725

Fig. 4

151

Mise à jour de la liste des demandes de transmission

133
d=0

134
d<D?          non          Demandes acceptées          135

oui

d=d+1          oui          Demande d compatible?          non          Optimisation sous contrainte

138                    136                    137

Fig. 5

Obtention de la liste des demandes de transmission    171

133    d=0

d<D?    134    non    Demandes acceptées    135

oui

Demande d compatible?    non    Optimisation sous contrainte

d=d+1    oui    136    137

138

Fig. 6

Fig. 7

Fig. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090122748 A1

**Littérature non-brevet citée dans la description**

- automatic optimisation of reliable collaborative services in OLSR mobile Ad Hoc Networks. **C. GUETTIER et al.** Military communications conference, 2007, MILCOM 2007. IRRR, 29 Octobre 2007, 1-7